# EUROPEAN PATENT SPECIFICATION

(11) **EP 2 380 968 B1**
(45) Date of publication and mention of the grant of the patent: **06.04.2016**
(21) Application number: 11163101.6
(22) Date of filing: 20.04.2011
(51) Int. Cl.: C12G 1/00, C12G 3/02, C12M 1/09

(54) **METHOD, AND APPARATUS, FOR PROCESSING AND FERMENTATION OF MUST**
VERFAHREN UND VORRICHTUNG ZUR VERARBEITUNG UND FERMENTATION VON MOST
PROCÉDÉ ET APPAREIL POUR LE TRAITEMENT ET LA FERMENTATION DE MOÛT

(30) Priority: 22.04.2010 IT VR20100080; 29.11.2010 IT VR20100228
(43) Date of publication of application: 26.10.2011
(73) Proprietor: Noform S.r.l., 30020 Meolo (VE) (IT)
(72) Inventor: Crosato, Remo, 30020, MEOLO (VE) (IT); Crosato, Bruno, 30020, MEOLO (VE) (IT)
(74) Representative: Citron, Massimiliano

(56) References cited:
- EP-A1- 0 159 547
- EP-A1- 2 058 385
- EP-A1- 2 060 623
- WO-A1-98/45403
- DE-A1- 19 531 941
- DE-B- 1 010 934
- FR-A1- 2 570 353
- US-A- 4 164 902
- US-A- 4 593 612
- US-A1- 2007 178 190

## Description

The present invention regards an improved method and apparatus for processing and fermentation of must composed from juice, or extracted of the fruit, and from the relative peel, in particular grape must.

The invention also regards an installation of, and an improved method of disposition for, fermenters or processing machines for a vegetable pressed product, i.e. grape must.

The known apparatuses of fermentation, dealt here for example those for the wine-making, are formed by a tank in which must can ferment creating a layer of floating peel (the cap) on a liquid part.

At completed fermentation, a felt problem for red wines is the transfer of the marc from the fermenter to a press without the same marc and must contained in it being oxided.

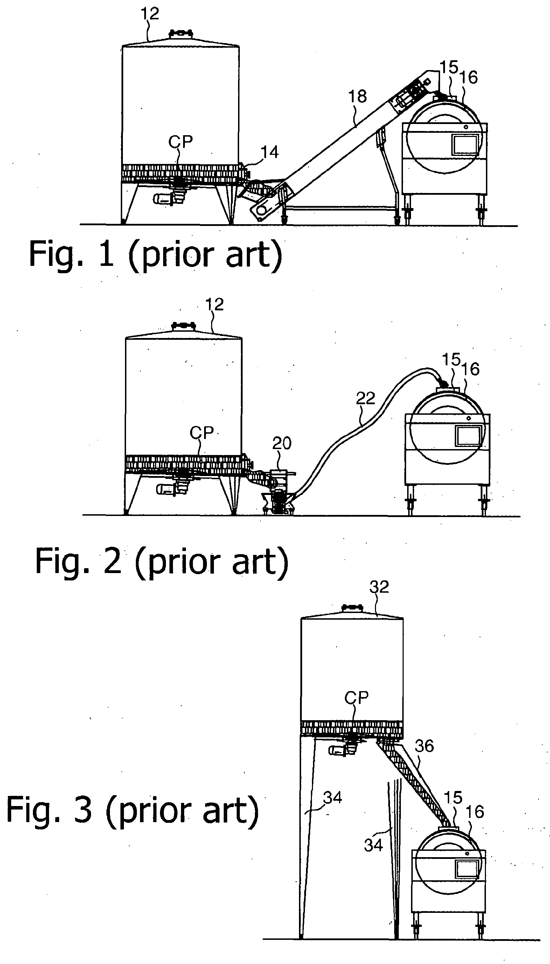

Fig. 1 shows a known method of transfer. Cap CP lays on the bottom of a tank 12 which has an opening for lateral drainage 14. Placed side by side to the tank 12, that from ground is raised of approximately 50 cm, is a press 16 and, with the aid of a belt conveyor 18, the marc is moved into the press 16. The presses have a loading mouth 15 obtained in a revolving drum, which to be loaded practically needs necessarily that it gets positioned so as to carry such mouth at the higher point, to some meters of height from ground. Therefore the belt 18 must let the marc to get over the difference in level. During the passage from tank 12 to the press 16 the marc suffers oxidation, since over the belt 18 it remains in contact with the air.

Fig. 2 shows another known method of transfer. The cap CP still lays on the bottom of tank 12.

To move the marc to the press 16 a pump 20 and a hose 22 are used for conveying it into the press 16. The marc in this case undergoes less oxidation, being isolated inside the hose, but greater mechanical stress caused by the pump 20, which generates the production of dregs and reduction of organoleptic qualities of the pressed product.

Figure 3 shows a third known method of transfer. The cap CP lays on the bottom of a tank 32 that is supported by legs 34 at a certain height, greater than the inlet 15 of the press 16 placed on one side of the fermenter. The marc is discharged through a chute 36 which conveys by gravity the marc from the fermenter to the press 30. As before, the marc undergoes significant oxidation traveling above the chute 36.

WO 98/45403 discloses a fermenting apparatus having at the bottom a discharge hatch by means of which it is possible to access the bottom. A discharge means allows the wine and marc to flow out by means of gravity, once fermentation has ended.

US 4 164 902 discloses a tank supported on legs and with a bottom having an opening closed by a door pivotally hinged to a flange.

EP 0 159 547 and US 4 593 612 disclose several embodiments of a tank. Some comprise a tapered bottom equipped with a horizontal screw feeding a horizontal discharge opening.

Other embodimentsshow an opening with a mouth inclined to the vertical. Another embodiment has a vertical opening commonly used to evacuate the marc from the bottom by means of a tube.

FR 2 570 353 discloses a tank with a bottom with a cover or hatch connected to the tank by means of an eccentric lever.

DE 195 31 941 discloses a mixer with a lower tap able to discharge a liquid or something homogeneous."

All these systems obviously lead to lower quality in winemaking.

The main object of the invention is to improve this state of the art with a method of processing and transfer of peel from a tank to a press without oxidation and/or mechanical stress.

Another object is to achieve an improved system of fermentation to carry out the method, by which the juice from the pressed peel is better.

These objects are achieved by a method as in Claim 1.

The direct connection between the tank and press, without intermediate means of transport for the peel, prevents the possibility of oxidation for the peel, and minimizes the mechanical intervention to move it.

The invention also relates to a fermentation apparatus as defined in Claim 7, to which we refer.

The particular configuration of the support means allows to get under the tank, in the center and/or one or more sides, the space needed to place the press.

Preferred variants of the invention are defined in the dependent Claims. To implement the method a fermentation apparatus can be used comprising a fermentation tank and support means that keep it at a certain height over a ground plane. Generally speaking, the tank can be "hung" on the ceiling of the cellar, so there remains an empty space sufficient to put a press directly below its discharge port.

The configuration of the support means can be optimized to achieve additional functionality, in particular to increase processing and production efficiency.

Further, said support means can be optimized in particular to build new architectural elements and functional structures.

Enhanced functions and/or efficiency are obtained by a method of installation as in Claim 4. The result is a system which is simple, quick to assemble, modular, and resistant to loads.

Typically, the fermenter or the machine can be hung (i.e. can lean on or be fixed to a supporting element so as to remain raised from ground or another horizontal plane) to any vertical element, flat or curved, of a building or basement, to the ceiling or building elements, e.g. beams, walls or carrying walls.

The bearing-elements can be chosen among all those that are adapted to support, e.g. rigid ones (beams, lattices, bars, tubes, etc.) or flexible ones, e.g. cables or tie-rods.

As a compact and rugged solution it is preferred to support the fermenter or the machine through one or more rigid elements, preferably linear, having one end anchored at said wall. Such end can be e.g. buried in concrete, welded, or attached (e.g. with bolts), or abutting on a bearing body or cavity. A very simple but very solid to mount variant is to hinge or joint a bearing element to said wall and support it with a tie-rod.

The bearing elements may take many forms, from simply linear to sophisticated variations to add architectural features. E.g. on one or more rigid elements, preferably coplanar and used as a structural frame, one can implement a walking plane and/or a parapet.

The installation method considers as a preferred organizational option that a series of fermenters or processing machines are suspended and arranged along an arc.

The method can be achieved with an apparatus as defined in the appended Claims. The same applies here for the bearing elements as said for the installation method.

Preferably the structure in the apparatus comprises a beam hinged or fixed to a wall and a tie-rod for keeping the beam horizontal. As mentioned above, it is an easy arrangement to install, but of high strength and not bulky.

The invention and its advantages will however be clearer from the following description of some preferred embodiments, illustrated in the annexed drawing in which:
Figure 1 shows an elevation of a known marc transfer system from a tank to a press;
Figure 2 shows an elevation of a second known marc transfer system from a tank to a press;
Figure 3 shows an elevation of a third known marc transfer system from a tank to a press;
Figure 4 shows an elevation of a wine-making apparatus according to the invention;
Fig 5 shows an elevation of a cellar installations in vertical cross-section;
Figure 6 shows an elevation of the installation in Fig. 5 in perspective view;
Figure 7 shows a plan of the cellar in Fig. 5 .

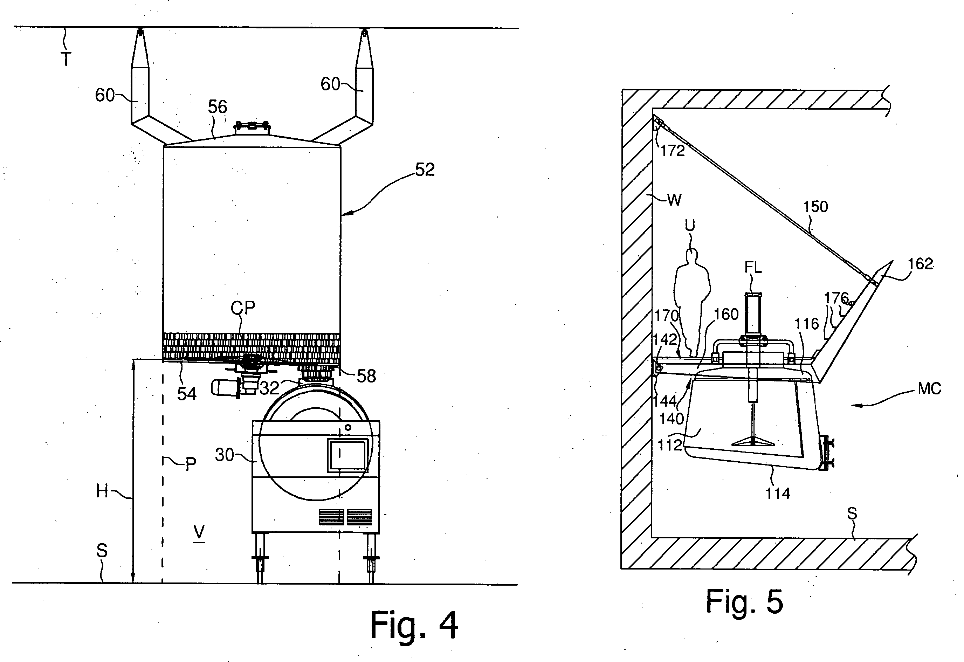

Figure 5 shows a fermenter according to the invention, which comprises a tank 52 for the must with a bottom 54 and a top 56. As before, the bottom 54 has a discharge port 58 for the cap CP.

Under the tank 52 is located a press 30 having a loading inlet 32 that provides access to the pressing rotating drum.

The tank 52 is raised off a ground plane S, which also supports the press 30, through support means embodied as four support beams 60. The beams 60 are fixed (e.g. by bolting or welding) to the top 56 (or to the sides) of the tank 52, from which they extend bending upwards (spacing themselves from the top 56 in the opposite direction to the bottom 54) as far as they anchor to the ceiling or a bearing raised truss T, e.g. of construction type.

In this way not only the cylindrical volume V between the bottom 54 and its projection on the plane S through generating lines P is free of support means, but so is the entire area below the tank 52. In other words, the legs 60 not only assure a height H sufficient to guarantee the insertion of the press 30 under the tank 52 but, holding suspended the tank 52 from above, remove any obstacle to the positioning or movement of the press 30.

Note that for "cylindrical or conical volume "here and above is meant the volume inside the surface locus of the generating lines (P in fig. 4), parallel to a fixed direction (here the perpendicular to plane S) and passing for the single points of a curve (in this case the perimeter of the bottom 54). This geometric definition is rigorous for the sake of description but clearly.is to be watered down to define the scope of the invention, which contemplates in substance to leave under the tank a sufficient volume to use as a space for maneuver and/or stop for the press.

In the variant of fig. 4 there is the big advantage of completely eliminating any obstacle or constraint during and for the positioning of the press 30. Especially in this variant it is advantageous to provide the bottom 54 of more openings 58 and put side by side under the tank 52 more presses 30, in which to discharge contemporarily the marc and reduce the time of the marc pressing phase.

The discharge port 58 and the inlet 32 are aligned and substantially fitting, with the advantages that the discharge port 28 and loading inlet 32 are substantially aligned and fitting, so that the marc from the tank 52 can pass directly to the press 30 without intermediate transport means. This ensures the absence of both oxidation and mechanical stress, limited to a minimum by the push of a scraping blade 34.

The value of H in fig. 4 depends on the (vertical) bulk of the press 30, and is still chosen to minimize the clearance in air between the discharge port 58 and the inlet 32. Here, too, preferably H can vary from 1 m to 4 m.

To adapt, or overlap, the tanks of wine-makers to presses of various sizes, it is advantageous that the support means have variable and adjustable geometry. E.g. telescopic legs or beams can be made, that is, with variable length and/or articulated parts, to vary the inclination thereof relatively to the other parts and/or the tank. The change in geometry or configuration of the various component parts can be obtained and controlled by means of actuators, e.g. hydraulic pistons, electric motors and the like mounted directly on the legs or beams.

A sophisticated construction for the support means can envisage e.g. an integrated control by a PLC or computer to control all actuators means. A variety of actuator means may allow to the legs or beams complex movements or variations of structure, e.g. as the robotic articulations. In high-performance models the support means may be true robotic articulations.

This allows a virtually unrestricted placement of the tank, and even moving it in space piloting and properly managing the structure and configuration of the support means, ultimately making it "walk," simulating with the legs or beams the movement of animal leg, e.g. those of a spider.

Especially when the support means have variable geometry and configurable at command, the operations of joining with the press are much simpler and lead to a more precise fitting. E.g. H can be increased before the press 30 moves under the tank 52, and then decrease it gradually until the opening 58 rests perfectly on the inlet 32. In practice, the press 30 thus becomes a continuation of the tank 52.

The invention is open to many other variations. E.g. the legs 60 may be in a different number from those illustrated, i.e. three, five, six or more, and arranged either symmetric or asymmetric. This according to project needs inherent to the fermenter.

It is clear therefore that it is also possible - according to the invention - to transform existing wine-maker apparatuses by partially modifying the support means thereof, so as to obtain the void space necessary for the press.

For the tank of the invention the preferred form is cylindrical or conical.

Figure 5 shows a fermenters MC installed according to the invention, comprising a tank 112 for the must approximately cylindrical or cone-shaped, with a bottom 114, for example raised, and a sloping top 116.

The tank 112 is raised from a ground plane S through support means in the form of rigid elements, e.g. two horizontal beams 140, one on each side, extending cantilevered from a wall W. The beams 140 can be fixed or hinged to the wall W, or be embedded in the wall and coming out therefrom.

The beams 140 comprise a straight segment 160 that extends with a second straight segment 162 tilted upwards with respect to the first one. Each beam 140 is hinged to the wall W by pins 142 inserted in wall-brackets 144 and kept horizontal by a tie-rod 150, tensioning an end of the segment 162 and attached to a plate 172 anchored to the supporting structure W. Note that the beam 140 can also be connected to the wall W through joint-coupling.

A pair of beams 140 support a tank 112 that is attached to the beams 140 for example by means of bolted joints or mounting plates.

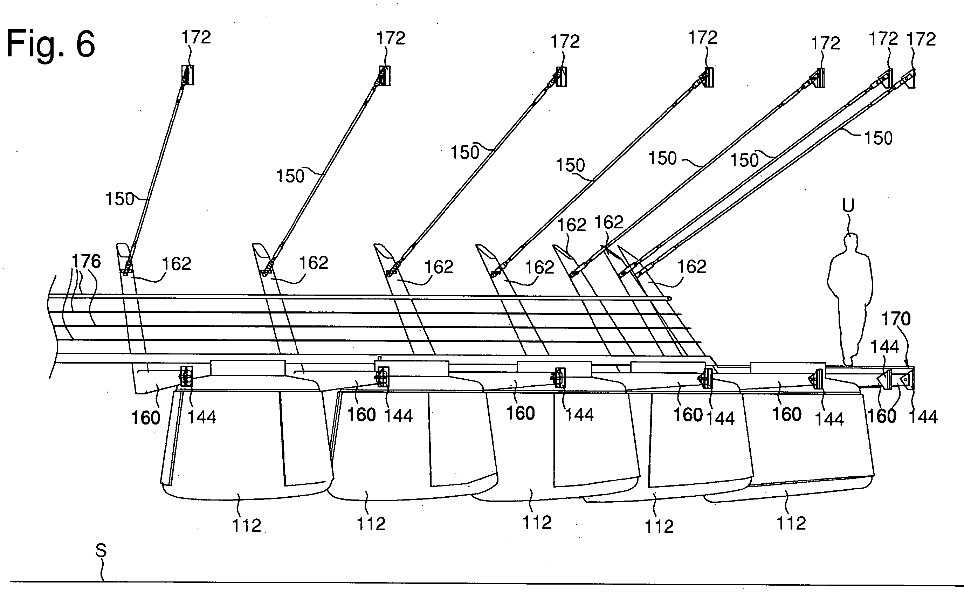

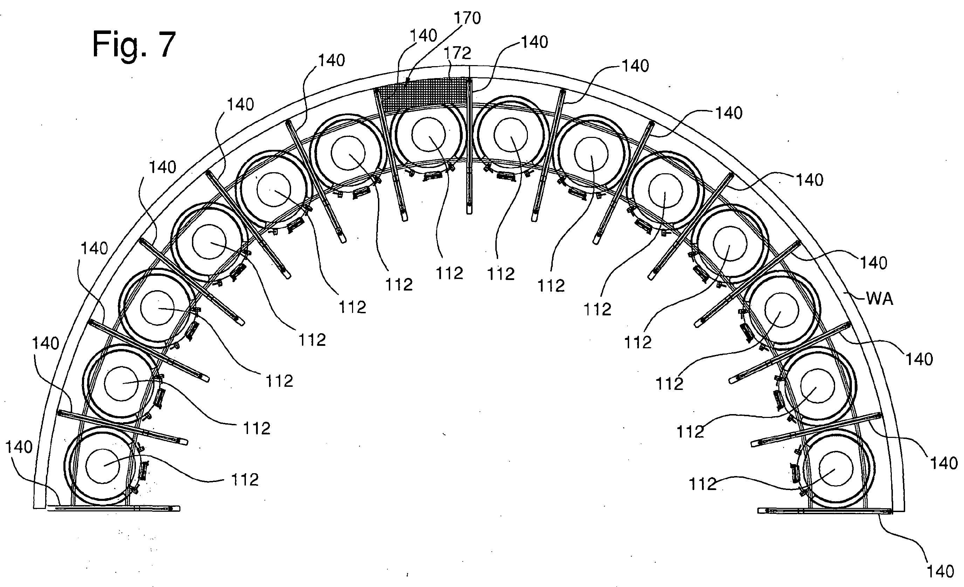

By putting side by side several beams 140 it is possible to create a carrying structure, to which to hang or hook (see Fig. 6, 7) a series of tanks 112 or suitable in general to keep them suspended over the ground plane S.

Since it is likely that many of the tanks in a cellar 112 are equal, it is preferable to maintain a set of beams 140 coplanar and at the same level, so that tanks 112 attached to them are all at the same height. The aim is to facilitate and standardize at most the operations on the tanks 112. To develop the cellar in height one can create multiple parallel planes of beams 140, vertically spaced as the height of a tank plus a workspace.

Coplanar beams 140 may advantageously add another feature to the cellar: they are used as the support frame for a walkable floor 170, made e.g. of panels or grilles or grates 172 placed on the beams 140 to pad the gaps (see fig. 7 showing e.g. only a grating). An operator U can comfortably and safely work on a tank 112, e.g. inspecting the must or operating a cap-breaker FL on wheels and rails, as described in EP 2060624.

The beams 140 are essentially cross-members on which are mounted rails to let the fuller FL slide over all the tanks 112.

Advantageously the coplanar beams 140 allow the construction of a parapet. By means of padding elements, e.g. horizontal bars 176, placed between the segments 162 a barrier may be formed that prevents an accidental fall to the floor of the operator U.

In general, the installation of the tanks 112 can occur with various arrangements. A particularly efficient one, because it allows a quick check of all the tanks and minimizes the dimensions of the cellar, is that wherein the tanks 112 are arranged along an arc or a circular arc (Fig. 7) or a full circle, e.g. close to an arched wall WA. Various lines of tanks can be also arranged on concentric arcs or circles. The roundness or curvature of the structure is compact and for example shortens the path to inspect all the tanks in series, or any electrical or fluid connection is minimized when a central control unit, and/or a collector/service-tank must serve all the tanks, are located on the barycenter of the arc or circle. The connections are substantially radial, with no curves, and converge at a point where one "sees" all the tanks.

The installation according to the invention may therefore include a parapet built on one or more rigid carrier elements.

## Claims

1. Processing method for the peel of a must formed by juice or fruit extract and the relative peel, in particular grape must,
**characterized by**
letting the must ferment in a tank (52) equipped with an opening on the bottom (58) to extract the peel therefrom,
at the end of fermentation, evacuating the liquid must from the tank and letting the peel deposit on the bottom,
placing a press (30) for the peel on a ground plane (S) below the tank aligning and directly putting said opening near a vertical loading inlet (32) of the press,
pushing the peel into the press.

2. Method according to claim 1, wherein the space needed to place the press under the tank and in direct contact with it is obtained by supporting the tank through supporting means which, all or only some, extend from the tank occupying only the space external to at least the substantially cylindrical or conical volume contained between the bottom and its projection (P) on the ground plane (S), so that under the tank remains a void space (V) sufficient to place the press (30) directly under said opening.

3. Method according to claim 1, wherein the space needed to place the press under the tank and in direct contact with it is obtained by hanging the tank from the ceiling or a pre-existing building structure which houses it, so that under the tank a void space (V) remains sufficient to place the press (30) directly under said opening.

4. Installation method for a fermenter (MC) or a processing machine for a pressed vegetable product, for example grape must, equipped with an opening on the bottom (58) to extract the peel therefrom, **characterized by** supporting the fermenters or the processing machine only by means of one or more bearing members (140) extending cantilevered from a vertical wall (W, WA), so as to be able to place a press (30) for the peel on a ground plane (S) below the tank aligning and directly putting said opening near a vertical loading inlet (32) of the press.

5. Method according to claim 4, wherein the fermenter or the machine is supported by means of one or more rigid bearing members (140) having one end anchored at said wall (W, WA).

6. Method according to claim 4 or 5, wherein on one or more coplanar, rigid bearing members a tread-on plane is made.

7. Fermentation apparatus for must formed by juice or fruit extract and the relative peel, in particular grape must, capable to carry out the method of the previous claims, comprising
- a tank (52) adapted to let the must ferment and there create a floating layer of peel called cap, the tank comprising a discharge opening (58) on the bottom (54) for discharging the cap deposited after evacuation of the liquid must, and
- supporting means (60) for supporting the tank and keeping it at a certain height above a ground plane (S),
**characterized in that**
the supporting means (60) extend only in the semi-space which is bordered by a plane passing through the bottom (54) of the tank (52) and includes the top (56) of the tank
so that below the tank a void space (V) remains sufficient to place a press (30) directly under said opening.

8. Apparatus according to claim 7, wherein the supporting means have connection points to the tank at its top (56).

9. Apparatus according to claim 8, wherein the supporting means comprise support elements (60) adapted for being fixed to a ceiling (T) or a raised truss, so as to keep the tank raised with respect to the ground plane (S).

10. Apparatus according to any of the preceding claims 7 to 9, wherein the supporting means have a modifiable structure between their connection points to the tank and the support points of the tank to the surrounding environment, so as to be able to vary the distance of the supporting means from said substantially cylindrical or conical volume (V) and/or the distance between the connection points to the tank and the support points to the surrounding environment.

11. Apparatus according to any of the preceding claims 7 to 10, comprising a structure for hanging the apparatus or the machine, with respect to a ground plane, comprised of only one or more bearing members (140, 150) extending cantilevered from a vertical wall.

12. Apparatus according to claim 11, wherein the structure comprises a beam (140) hinged or fixed to a wall (W) and a tie-rod means (150) to keep the beam horizontal.

13. Apparatus according to claim 11 or 12, comprising a tread-on plane (170) made on one or more rigid carrier members.

14. Apparatus according to any claim 7 to 13, provided at the bottom with more openings (58) to discharge contemporarily the marc.

15. Installation comprising a set of apparatus as in any one of Clams 7 to 14, wherein the apparatuses (12) are hung and arranged along a circular arc.

## Patentansprüche

1. Verarbeitungsverfahren von Schale aus Most von Saft oder Fruchtextrakt und der zugehörigen Schale, insbesondere Traubenmost,
**dadurch gekennzeichnet, dass**
der Most in einem Behälter (52) fermentiert gelassen wird, der an der Unterseite mit einer Öffnung (58) ausgestattet ist, aus der die Schalen entnommen werden,
nach der Fermentierung der flüssige Most aus dem Behälter abgeführt wird und sich die Schale auf der Unterseite absetzt,
eine Schalen-Presse (30) auf einer Bodenfläche (S) unter dem Behälter angebracht ist, indem besagte Öffnung direkt zu einer vertikalen Einfüllöffnung (32) der Presse ausgerichtet und herangerückt ist,
der Trester in die Presse gedrückt wird.

2. Verfahren nach Anspruch 1, in dem der benötigte Platz erhalten wird, um die Presse unter besagten Behälter und in direktem Kontakt mit diesem zu platzieren, indem der Behälter mit Stützeinrichtungen gestützt wird, welche alle oder nur einige vom Behälter ausgehen und ausschließlich den Außenbereich des zumindest im Wesentlichen zylindrischen oder konischen Volumens einnehmen, welches zwischen dem Boden und seiner Projektion (P) auf der Bodenfläche (S) besteht, so dass unter dem Behälter ein Leerraum (V) bleibt, der ausreichend ist, um die Presse (30) direkt unter die besagte Öffnung zu platzieren.

3. Verfahren nach Anspruch 1, in dem der benötigte Platz erhalten wird, um die Presse unter besagtem Behälter und in direktem Kontakt mit diesem zu platzieren, indem der Behälter an der Decke oder einer in der Umgebung bestehenden Baustruktur aufgehängt wird, so dass unter dem Behälter ein Leerraum (V) bleibt, der ausreichend ist, um die Presse (30) direkt unter die besagte Öffnung zu platzieren.

4. Montageverfahren für einen Fermenter (MC) oder eine Verarbeitungsmaschine für Kelter, z.B. Traubenmost, die an der Unterseite mit einer Öffnung (58) versehen ist, aus der die Schalen entnommen werden,
**dadurch gekennzeichnet**, den Fermenter oder die Verarbeitungsmaschine nur durch ein oder mehrere Trägerelemente (140) zu stützen, die sich freitragend von einer vertikalen Wand (W, WA) erstrecken, so dass eine Schalen-Presse (30) auf einer Bodenfläche (S) unter dem Behälter platziert werden kann, indem besagte Öffnung (32) der Presse direkt ausgerichtet und herangerückt ist.

5. Verfahren nach Anspruch 4, bei dem der Fermenter oder die Maschine durch ein oder mehrere starre Trageelemente (140) getragen werden, die mit einem Ende an der besagten Wand (W, WA) befestigt sind.

6. Verfahren nach Anspruch 4 oder 5, bei dem bei einem oder mehreren koplanaren und starren Trägerelementen eine betretbare Fläche gebildet wird.

7. Fermentierungsanlage für Most aus Saft oder Fruchtextrakt und der zugehörigen Schale, insbesondere für Traubenmost, die geeignet ist, um die Methoden der vorhergehenden Ansprüche durchzuführen und bestehend aus
- einem Behälter (52), der so ausgelegt ist, um den Most zum Fermentieren zu bringen und dort eine schwimmende Schicht aus Schalen zu bilden, die Haube genannt wird; der Behälter enthält an der Unterseite (54) eine Auslassöffnung (58), um die Haube zu beseitigen, die sich nach dem Abführen der Mostflüssigkeit ablagert, und
- Haltevorrichtungen (60), um den Behälter zu stützen und ihn gegenüber der Bodenfläche (S) auf eine bestimmte Höhe zu halten,
**dadurch gekennzeichnet, dass**
sich die Haltevorrichtungen (60) im Halbraum erstrecken, der durch eine Fläche begrenzt ist, welche die Unterseite (54) des Behälters (52) durchläuft und die Oberseite (56) des Behälters umfasst,
so dass unter dem Behälter ein Leerraum (V) bleibt, der ausreichend ist, um eine Presse (30) direkt unter besagter Öffnung zu platzieren.

8. Vorrichtung nach Anspruch 7, bei der die Haltevorrichtungen Verbindungsstellen am Behälter entsprechend seiner Oberseite (56) haben.

9. Vorrichtung nach Anspruch 8, bei der die Haltevorrichtungen aus Halteelementen (60) bestehen, die geeignet sind, um an einer Decke (T) oder einem angehobenen Tragwerk befestigt zu werden, um den Behälter gegenüber der Bodenfläche (S) gehoben zu halten.

10. Vorrichtung nach einem der vorhergehenden Ansprüche von 7 bis 9, bei der die Tragevorrichtungen eine änderbare Struktur ihrer Verbindungsstellen zum Behälter und den Stützpunkten zum Behälter in der Umgebung haben, um den Abstand der Haltevorrichtungen von besagtem im Wesentlichen zylindrischen oder konischen Volumen (V) bzw. den Abstand zwischen den Verbindungsstellen zum Behälter und den Haltevorrichtungen zur Umgebung verändern zu können.

11. Vorrichtung nach einem der vorhergehenden Ansprüche von 7 bis 10, bestehend aus einer Struktur, um die Vorrichtung gegenüber der Bodenfläche angehoben zu halten, bestehend nur aus einem oder mehreren Trägerelementen (140, 150), die sich freitragend von einer vertikalen Wand erstrecken.

12. Vorrichtung nach Anspruch 11, bei der die Struktur einen Träger (140) umfasst, der an einer Wand (W) und einer Zugstangenvorrichtung (150) gelenkig angebracht oder befestigt ist, um den Träger horizontal zu halten.

13. Vorrichtung nach Anspruch 11 oder 12, bestehend aus einer begehbaren Fläche (170), die aus einem oder mehreren festen Trägerelementen gebildet wird.

14. Vorrichtung nach einem der vorherigen Ansprüche von 7 bis 13, die mit mehreren Öffnungen (58) an der Unterseite versehen ist, um gleichzeitig die Schale abzuführen.

15. Anlage, bestehend aus einer Serie an Vorrichtungen nach einer der Ansprüche von 7 bis 14, bei der die Vorrichtungen (112) angehoben und entlang einem kreisförmigen Bogen angeordnet sind.

## Revendications

1. Procédé de traitement des peaux d'un moût composé de jus ou d'extrait du fruit et de ses peaux, plus particulièrement le moût de raisin,
**caractérisé par** le fait
de laisser fermenter le moût dans une cuve (52) dotée, sur son fond, d'une ouverture (58) d'où l'on peut extraire les peaux,
d'évacuer le moût liquide de la cuve à la fin de la fermentation et de permettre aux peaux de se déposer sur le fond,
de positionner une presse (30) pour traiter les peaux sur le plan du sol (S) au-dessous de la cuve, en alignant et en juxtaposant directement ladite ouverture à un orifice de chargement vertical (32) de la presse,
de pousser le marc de raisin dans la presse.

2. Procédé selon la revendication 1, dans lequel l'espace nécessaire pour placer la presse au-dessous de la cuve et au contact direct de celle-ci est obtenu en supportant la cuve à l'aide de moyens de support qui se déploient, dans leur totalité ou pour certains d'entre eux, à partir de la cuve en occupant uniquement un espace extérieur au moins égal au volume fondamentalement cylindrique ou conique compris entre le fond et sa projection (P) sur le plan du sol (S), de manière à ce qu'il reste au-dessous de la cuve un espace vide (V) suffisant pour placer la presse (30) directement sous l'ouverture.

3. Procédé selon la revendication 1, dans lequel l'espace nécessaire pour placer la presse au-dessous de la cuve et au contact direct de celle-ci est obtenu en suspendant la cuve au plafond ou à une structure préexistante du bâtiment qui l'abrite, de manière à ce qu'il reste au-dessous de la cuve un espace vide (V) suffisant pour placer la presse (30) directement sous l'ouverture.

4. Procédé d'installation relatif à un fermenteur (MC) ou une machine de traitement d'un produit foulé, par exemple du moût de raisin, doté(e) sur son fond d'une ouverture (58) d'où l'on peut extraire les peaux,
**caractérisé par** le fait de supporter le fermenteur ou la machine de traitement uniquement au moyen d'un ou de plusieurs éléments porteurs (140) s'étendant en porte-à-faux par rapport à un mur vertical (W, WA), de manière à pouvoir positionner une presse (30) pour traiter les peaux sur le plan du sol (S) au-dessous de la cuve, en alignant et en juxtaposant directement ladite ouverture à un orifice de chargement vertical (32) de la presse.

5. Procédé selon la revendication 4, dans lequel le fermenteur ou la machine est supporté(e) au moyen d'un ou de plusieurs éléments porteurs rigides (140) dont l'une des extrémités est ancrée dans le mur (W, WA).

6. Procédé selon la revendication 4 ou 5, dans lequel un plan sur lequel on peut marcher est réalisé sur un ou plusieurs éléments porteurs rigides et coplanaires.

7. Appareil de fermentation destiné au moût composé de jus ou d'extrait du fruit et de ses peaux, plus particulièrement le moût de raisin, en mesure de réaliser le procédé décrit dans les revendications précédentes et comprenant
- une cuve (52) permettant de faire fermenter le moût et de générer dans celle-ci une couche de peaux flottante appelée chapeau, la cuve comprenant une ouverture de déchargement (58) sur son fond (54), pour décharger le chapeau qui s'y est déposé après l'évacuation du moût liquide, et
- des moyens de support (60) permettant de supporter la cuve et de la maintenir à une certaine hauteur par rapport au plan du sol (S),
**caractérisé en ce que**
les moyens de support (60) s'étendent dans le demi-espace délimité par un plan passant à travers le fond (54) de la cuve (52) et comprenant le toit (56) de la cuve,
de manière à ce qu'il reste au-dessous de la cuve un espace vide (V) suffisant pour placer une presse (30) directement sous l'ouverture.

8. Appareil selon la revendication 7, dans lequel les moyens de support possèdent des points de fixation à la cuve au niveau de son toit (56).

9. Appareil selon la revendication 8, dans lequel les moyens de support comprennent des éléments de support (60) susceptibles d'être fixés à un plafond (T) ou un poutrage surélevé, de manière à maintenir la cuve suspendue par rapport au plan du sol (S).

10. Appareil selon l'une quelconque des revendications 7 à 9 précédentes, dans lequel les moyens de support ont une structure modifiable entre leurs points de fixation à la cuve et les points d'appui de la cuve au cadre environnant, de manière à permettre de modifier la distance des moyens de support à partir du volume (V) fondamentalement cylindrique ou conique et/ou la distance entre les points de fixation à la cuve et les points d'appui au cadre environnant.

11. Appareil selon l'une quelconque des revendications 7 à 10 précédentes, comprenant une structure permettant de maintenir l'appareil suspendu par rapport au plan du sol, constituée uniquement d'un ou de plusieurs éléments porteurs (140, 150) s'étendant en porte-à-faux par rapport à un mur vertical.

12. Appareil selon la revendication 11, dans lequel cette structure comprend une poutre (140) articulée ou fixée à un mur (W) et un tirant de soutien (150) pour maintenir la poutre horizontale.

13. Appareil selon la revendication 11 ou 12, comprenant un plan sur lequel on peut marcher (170) réalisé sur un ou plusieurs éléments porteurs rigides.

14. Appareil selon l'une quelconque des revendications 7 à 13 précédentes, doté sur son fond de plusieurs ouvertures (58) permettant de décharger simultanément les peaux.

15. Installation comprenant une série d'appareils selon l'une des revendications 7 à 14, dans laquelle les appareils (112) sont suspendus et disposés le long d'un arc de cercle.
